# EUROPEAN PATENT APPLICATION

(11) **EP 4 717 571 A1**
(43) Date of publication of application: **01.04.2026**
(21) Application number: 25204879.8
(22) Date of filing: 26.09.2025
(51) Int. Cl.: B62J 17/10

(54) **STRADDLED VEHICLE**

(30) Priority: 30.09.2024 JP 2024170625
(71) Applicant: Yamaha Hatsudoki Kabushiki Kaisha, Iwata-shi, Shizuoka 438-8501 (JP)
(72) Inventor: TSUYA, Koji, Iwata-shi, Shizuoka, 4388501 (JP)
(74) Representative: Stöckeler, Ferdinand

(57) **Abstract**

A straddled vehicle (10) includes a cowl (20) having a winglet (30), the straddled vehicle (10) being capable of providing a target aerodynamic performance while suppressing an increase in size of the winglet (30), and ultimately of the straddled vehicle (10), in the vehicle (10) width direction. A non-tunneled air guide path (40A) formed above an upper winglet portion (32) is configured to extend in the forward-rearward direction of the vehicle (10) along an upper outward-inclined cowl front surface (22), which is a portion (32) of the cowl front surface (22), the portion being located farther upward than the upper winglet portion (32) and inclined outward in the vehicle (10) width direction. A tunneled air guide path (40A) formed below the upper winglet portion (32) and enclosed by a lower surface of the upper winglet portion (32), an inner side surface of a lower winglet portion (34) in the vehicle (10) width direction, and a part of the cowl front surface (22) is configured to extend in the forward-rearward direction of the vehicle (10) along a lower inward-inclined cowl front surface (22), which is a portion of the cowl front surface (22), the portion being located farther downward than the upper winglet portion (34) and inclined inward in the vehicle (10) width direction.

## Description

### Technical Field

The present teaching relates to a straddled vehicle including a cowl, and in more detail, relates to a straddled vehicle including a cowl having a winglet.

### Background Art

Conventionally known is a straddled vehicle having a cowl that is configured to regulate a traveling wind stream. Recently known is a straddled vehicle including a cowl having a winglet (for example, see PTL 1 listed below). In these types of straddled vehicles, a winglet disposed in the cowl improves the aerodynamic performance.

### Citation List

### Patent Literature

PTL 1: Japanese Patent No. 6663451

### Summary of Invention

### Technical Problem

A winglet is disposed in a cowl so as to protrude from a cowl surface. Thus, an attempt to obtain a target aerodynamic performance involves an increase in size of the winglet, and ultimately of the straddled vehicle, in the vehicle width direction.

The present teaching aims to provide a straddled vehicle including a cowl having a winglet, the straddled vehicle being capable of providing a target aerodynamic performance while suppressing an increase in size of the winglet, and ultimately of the straddled vehicle, in the vehicle width direction.

### Solution to Problem

The inventor of the present teaching conducted studies about means for attaining this aim, and consequently obtained the findings described below.

A conceivable way to suppress the size of the winglet, and ultimately of the straddled vehicle, in the vehicle width direction is, for example, to reduce the amount of protrusion of the winglet in the vehicle width direction. This makes it difficult to obtain a target aerodynamic performance, however.

Thus, the inventor of the present teaching conducted studies about a position at which the winglet is disposed in the cowl, and consequently obtained the findings of arranging the winglet on a cowl front surface. Here, the cowl front surface refers to a part of a cowl surface, the part being visible in a vehicle front view, the part being configured to let a traveling wind stream flow rearward of the vehicle and outward in the vehicle width direction. That is, in a vehicle front view, the cowl front surface is present farther inward in the vehicle width direction than the outermost end of the cowl in the vehicle width direction. Arranging the winglet on the cowl front surface can reduce the amount of protrusion of the winglet in the vehicle width direction, and thus can suppress the size of the winglet, and ultimately of the straddled vehicle, in the vehicle width direction.

In a case of arranging the winglet on the cowl front surface as described above, the winglet may be configured to have an upper winglet portion and a lower winglet portion, for example. The upper winglet portion is disposed so as to protrude from the cowl front surface. The upper winglet portion is configured such that a negative lift caused by a traveling wind stream at a time of the vehicle traveling acts thereon. The lower winglet portion is disposed so as to protrude from the cowl front surface, at a location lower than the upper winglet portion. The lower winglet portion is, by being connected to the upper winglet portion, configured to support the upper winglet portion on which the negative lift acts at a time of the vehicle traveling.

If such a winglet is disposed on the cowl front surface, air guide paths are formed above and below the upper winglet portion, respectively, the air guide paths being each configured to let a traveling wind stream flow therethrough. The upper air guide path is a non-tunneled air guide path. The lower air guide path is a tunneled air guide path enclosed by a lower surface of the upper winglet portion, an inner side surface of the lower winglet portion in the vehicle width direction, and a part of the cowl front surface.

Here, to obtain a target aerodynamic performance, it is necessary to obtain a flow rate of the traveling wind stream flowing through each of the air guide paths formed above and below the upper winglet portion. More specifically, it is necessary to obtain a flow rate of the traveling wind stream flowing along each of upper and lower surfaces of the upper winglet portion. Because the lower air guide path is a tunneled air guide path while the upper air guide path is a non-tunneled air guide path, it is especially necessary to figure out how to obtain a flow rate of the traveling wind stream flowing through the lower air guide path. In addition, because the upper air guide path is a non-tunneled air guide path, it is also necessary to figure out how to make the traveling wind stream flowing in the upper air guide path flow along an upper surface of the upper winglet portion.

Taking these circumstances into account, the inventor of the present teaching further conducted advanced studies, and consequently found out that it may be preferable to configure the upper air guide path so as to extend in the forward-rearward direction of the vehicle along an upper outward-inclined cowl front surface, the upper outward-inclined cowl front surface being a portion of the cowl front surface, the portion being located farther upward than the upper winglet portion and inclined outward in the vehicle width direction, and configure the lower air guide path so as to extend in the forward-rearward direction of the vehicle along a lower inward-inclined cowl front surface, the lower inward-inclined cowl front surface being a portion of the cowl front surface, the portion being located farther downward than the upper winglet portion and inclined inward in the vehicle width direction.

Based on the findings described above, the present teaching is accomplished. The present teaching adopts the following configurations.
(1) A straddled vehicle including:
   a cowl configured to regulate a traveling wind stream when the vehicle travels; and
   a winglet disposed in the cowl, the winglet being configured such that a negative lift caused by a traveling wind stream at a time of the vehicle traveling acts thereon,
   the cowl including a cowl front surface, the cowl front surface being disposed so as to be visible in a vehicle front view, the cowl front surface being configured to let a traveling wind stream flow rearward of the vehicle and outward in vehicle width direction when the vehicle travels,
   the winglet including an upper winglet portion and a lower winglet portion, the upper winglet portion being disposed so as to protrude from the cowl front surface, the upper winglet portion being configured such that the negative lift acts thereon when the vehicle travels, the lower winglet portion being disposed so as to protrude from a portion of the cowl front surface, the portion being located farther downward than the upper winglet portion, the lower winglet portion being connected to the upper winglet portion and configured to support the upper winglet portion on which the negative lift acts when the vehicle travels, whereby
      air guide paths are formed above and below the upper winglet portion, respectively, the air guide paths being each configured to let a traveling wind stream flow therethrough when the vehicle travels,
      the air guide path formed above the upper winglet portion is a non-tunneled air guide path, and is configured to extend in forward-rearward direction of the vehicle along an upper outward-inclined cowl front surface, the upper outward-inclined cowl front surface being a portion of the cowl front surface, the portion being located farther upward than the upper winglet portion and inclined outward in the vehicle width direction, and
      the air guide path formed below the upper winglet portion is a tunneled air guide path enclosed by a lower surface of the upper winglet portion, an inner side surface of the lower winglet portion in the vehicle width direction, and a part of the cowl front surface, the tunneled air guide path being configured to extend in the forward-rearward direction of the vehicle along a lower inward-inclined cowl front surface, the lower inward-inclined cowl front surface being a portion of the cowl front surface, the portion being located farther downward than the upper winglet portion and inclined inward in the vehicle width direction.

The straddled vehicle of (1) is capable of providing a target aerodynamic performance while suppressing an increase in size of the winglet, and ultimately of the straddled vehicle, in the vehicle width direction. Further details are as follows.

The winglet is disposed on the cowl front surface, which is visible in a vehicle front view. The size of the winglet, and ultimately of the straddled vehicle, in the vehicle width direction can be suppressed.

The non-tunneled air guide path, which is formed above the upper winglet portion, extends in the forward-rearward direction of the vehicle along the upper outward-inclined cowl front surface. It is possible to obtain a flow rate of the traveling wind stream flowing along an upper surface of the upper winglet portion. The tunneled air guide path, which is formed below the upper winglet portion, extends in the forward-rearward direction of the vehicle along the lower inward-inclined cowl front surface. It is possible to obtain a flow rate of the traveling wind stream flowing along the lower surface of the upper winglet portion. That is, it is possible to obtain flow rates of the traveling wind streams flowing through the air guide paths formed above and below the upper winglet portion, respectively. A target aerodynamic performance can be obtained.

The straddled vehicle is a vehicle having a saddle-type seat. The straddled vehicle is a vehicle configured to have a rider ride thereon astride the saddle. The straddled vehicle is not limited to a motorcycle of a scooter type, a moped type, an off-road type, or an on-road type, but includes a snowmobile, a watercraft, an all-terrain vehicle (ATV), and the like. The straddled vehicle, for example, includes at least one front wheel and at least one rear wheel. The straddled vehicle is not limited to a motorcycle, and may be a motor tricycle whose front wheel or rear wheel is composed of a pair of left and right wheels, or a four-wheeled motor vehicle whose front wheel and rear wheel are each composed of a pair of left and right wheels. The straddled vehicle may be configured to be capable of turning with a leaning posture in which the straddled vehicle leans toward the inside of a curve. At least one of the front wheel or the rear wheel of the straddled vehicle may be inclined toward the inside of a curve when the straddled vehicle turns with a leaning posture toward the inside of the curve.

The cowl, for example, is disposed so as to constitute a part of a vehicle body, and is configured to regulate a traveling wind stream when the vehicle travels.

Regulating a traveling wind stream when the vehicle travels encompasses, for example, causing a traveling wind stream that comes into contact with the cowl surface when the vehicle travels to flow along the cowl surface from the forward to the rearward of the vehicle. Regulating a traveling wind stream when the vehicle travels encompasses, for example, evading a traveling wind stream that comes into contact with the cowl surface when the vehicle travels. Regulating a traveling wind stream when the vehicle travels encompasses, for example, reducing an air resistance when the vehicle travels. Regulating a traveling wind stream when the vehicle travels encompasses, for example, suppressing a traveling wind stream hitting a rider who is driving the straddled vehicle when the vehicle travels.

The cowl is disposed farther forward than a rider who is driving the straddled vehicle, for example. With this, the cowl is configured to suppress a traveling wind stream hitting the rider who is driving the straddled vehicle when the vehicle travels.

The cowl is disposed farther forward than the seat on which a rider who is driving the straddled vehicle sits, for example. With this, the cowl is configured to suppress a traveling wind stream hitting the rider who is driving the straddled vehicle when the vehicle travels.

The cowl is disposed in a forward portion of the vehicle body of the straddled vehicle, for example. With this, the cowl is configured to suppress a traveling wind stream hitting the rider who is driving the straddled vehicle when the vehicle travels. The forward portion of the vehicle body is a portion of the vehicle body, the portion being farther forward than where the distance from the forward end to the rear end of the vehicle body is bisected in the forward-rearward direction of the vehicle, for example.

The cowl is just required to be configured to have at least the winglet. For example, in a case of the winglet disposed in an upper cowl, the cowl is just required to include at least the upper cowl.

The cowl is disposed so as to be laterally symmetrical with respect to the center axis of a steering shaft in a vehicle front view, for example. With this configuration, the cowl front surface is disposed left and right with respect to the aforementioned center axis, for example. The cowl front surface is disposed farther outward in the vehicle width direction than the center axis of the steering shaft in a vehicle front view, for example. The steering shaft is configured to transmit a rider's manipulation on a handlebar to the front wheel, for example.

The cowl front surface is disposed in the cowl. The cowl front surface is a portion of the cowl surface, the portion being visible in a vehicle front view, for example. The cowl front surface is at least a portion of the cowl surface, the portion being visible in a vehicle front view, for example.

The configuration in which the cowl front surface is disposed so as to be visible in a vehicle front view encompasses a configuration in which at least a portion of the cowl front surface is disposed so as to be visible in a vehicle front view, for example. The cowl front surface has at least a portion thereof disposed so as to be visible in a vehicle front view, for example. In this case, the winglet is disposed in the portion of the cowl front surface visible in a vehicle front view, for example.

The cowl front surface is disposed farther inward in the vehicle width direction than the outermost end of the cowl in the vehicle width direction in a vehicle front view, for example. The cowl front surface is a portion of the cowl surface, the portion being located farther inward in the vehicle width direction than the outermost end of the cowl in the vehicle width direction in a vehicle front view, for example.

The cowl front surface is disposed in a forward portion of the cowl, for example. The cowl front surface is disposed in the forward portion of the cowl such that the cowl front surface is located in the forward portion of the vehicle body of the straddled vehicle, for example. The forward portion of the cowl is a portion of the cowl, the portion being farther forward than where the distance from the forward end to the rear end of the cowl is bisected in the forward-rearward direction of the vehicle, for example.

At least a portion of the cowl front surface is disposed in a cowl forward end portion, for example. At least a portion of the cowl front surface is disposed in the cowl forward end portion so as to be located in a vehicle body forward end portion of the straddled vehicle, for example. The cowl forward end portion is a portion including the forward end of the cowl and its vicinity, for example.

The cowl front surface is configured to partially cover a front fork in a vehicle front view, for example. The cowl front surface, which is configured to partially cover the front fork in a vehicle front view, is provided with the winglet. The size of the winglet, and ultimately of the straddled vehicle, in the vehicle width direction can be suppressed. The front fork is configured to support the front wheel of the straddled vehicle rotatably, for example.

The cowl front surface is disposed so as to locate farther upward than the front wheel, for example. The cowl front surface is disposed so as to locate farther upward than a front fender, for example. The front fender is configured to cover at least a portion of the front wheel in a vehicle top view, for example.

The configuration of letting a traveling wind stream flow rearward of the vehicle and outward in the vehicle width direction when the vehicle travels encompasses a configuration in which a traveling wind stream that comes into contact with the cowl front surface when the vehicle travels flows from the forward of the vehicle to the rearward of the vehicle while flowing from the inward in the vehicle width direction to the outward in the vehicle width direction, for example.

The cowl may be composed of a plurality of cowl parts. In a case of the cowl composed of a plurality of cowl parts, the cowl front surface may be disposed in any one of the plurality of cowl parts, or may be disposed in each of two cowl parts out of the plurality of cowl parts, for example. The two cowl parts are arranged adjacent to each other, for example. That is, the cowl front surface may include a plurality of cowl front surface portions. The cowl front surface portions may include an upper cowl front surface portion including the upper outward-inclined cowl front surface, and a lower cowl front surface portion including the lower inward-inclined cowl front surface.

The cowl front surface includes the upper outward-inclined cowl front surface and the lower inward-inclined cowl front surface. The upper outward-inclined cowl front surface is located farther upward than the lower inward-inclined cowl front surface.

The upper outward-inclined cowl front surface is configured to be inclined outward in the vehicle width direction so that its outer edge portion in the vehicle width direction is located farther upward than its inner edge portion in the vehicle width direction. The configuration in which the upper outward-inclined cowl front surface is inclined outward in the vehicle width direction encompasses a configuration in which the upper outward-inclined cowl front surface is inclined forward of the vehicle while being inclined outward in the vehicle width direction, for example. The upper outward-inclined cowl front surface is configured to partially cover the upper winglet portion in a vehicle top view. The upper outward-inclined cowl front surface is disposed so as to be visible in a vehicle front view, and is configured to let a traveling wind stream flow rearward of the vehicle and outward in the vehicle width direction when the vehicle travels. The inclination angle of the upper outward-inclined cowl front surface may or may not be constant in the up-down direction of the vehicle and in the forward-rearward direction of the vehicle.

The lower inward-inclined cowl front surface is located farther downward than the upper outward-inclined cowl front surface. The lower inward-inclined cowl front surface is configured to be inclined inward in the vehicle width direction so that its inner edge portion in the vehicle width direction is located farther upward than the outer edge portion in the vehicle width direction. The configuration in which the lower inward-inclined cowl front surface is inclined inward in the vehicle width direction encompasses a configuration in which the lower inward-inclined cowl front surface is inclined rearward of the vehicle while being inclined inward in the vehicle width direction, for example. The lower inward-inclined cowl front surface is configured to be partially covered by the upper winglet portion in a vehicle top view. The lower inward-inclined cowl front surface, which is provided in the cowl front surface, is located between the position at which the upper winglet portion is disposed so as to protrude and the position at which the lower winglet portion is disposed so as to protrude, for example. The lower inward-inclined cowl front surface is disposed so as to be visible in a vehicle front view, and is configured to let a traveling wind stream flow rearward of the vehicle and outward in the vehicle width direction when the vehicle travels. The inclination angle of the lower inward-inclined cowl front surface may or may not be constant in the up-down direction of the vehicle and in the forward-rearward direction of the vehicle. The inclination angle of the lower inward-inclined cowl front surface may be equal to the inclination angle of the upper outward-inclined cowl front surface, may be greater than the inclination angle of the upper outward-inclined cowl front surface, or may be smaller than the inclination angle of the upper outward-inclined cowl front surface.

The winglet is disposed in the forward portion of the cowl, for example. The winglet includes a portion on which a negative lift caused by a traveling wind stream at a time of the vehicle traveling acts. This portion is the upper winglet portion. This portion includes a wing section, for example. The negative lift is what is called a down force. On this portion, a downward force acts. To the winglet, a force pressing this portion downward acts.

The winglet is configured such that the upper winglet portion is located farther upward than the front wheel in a vehicle side view, for example. The winglet is configured such that the upper winglet portion is located farther upward than the center of rotation of the front wheel in a vehicle side view, for example. This makes a negative lift likely to act on the front wheel. A target aerodynamic performance can be obtained easily. The configuration in which the upper winglet portion is located farther upward than the front wheel in a vehicle side view encompasses a configuration in which, for example, at least a part of the upper winglet portion is located between a forward end reference line and a rear end reference line in a vehicle side view, the forward end reference line passing through the forward end of the front wheel while extending in the up-down direction of the vehicle, the rear end reference line passing through the rear end of the front wheel while extending in the up-down direction of the vehicle. The configuration in which the upper winglet portion is located farther upward than the center of rotation of the front wheel in a vehicle side view encompasses a configuration in which, for example, a center-of-rotation reference line intersects with the upper winglet portion in a vehicle side view, the center-of-rotation reference line passing through the center of rotation of the front wheel while extending in the up-down direction of the vehicle.

The winglet is configured such that the upper winglet portion is located in the vehicle body forward end portion of the straddled vehicle, for example. This makes a negative lift likely to act on the vehicle body forward end portion. A target aerodynamic performance can be obtained easily. The vehicle body forward end portion is a portion including the forward end of the vehicle body of the straddled vehicle and its vicinity, for example. For example, in a case where the forward end of the upper winglet portion corresponds to the forward end of the vehicle body of the straddled vehicle, the upper winglet portion is located in the vehicle body forward end portion of the straddled vehicle.

The winglet is configured such that the upper winglet portion is located in the cowl forward end portion, for example. This makes a negative lift likely to act on the vehicle body forward end portion or its vicinity. A target aerodynamic performance can be obtained easily.

The winglet is configured such that the outermost end of the upper winglet portion in the vehicle width direction is located farther forward than where the cowl front surface is bisected in the forward-rearward direction of the vehicle, for example. This makes a negative lift likely to act on the vehicle body forward end portion or its vicinity. A target aerodynamic performance can be obtained easily.

The winglet is configured such that the forward end of the upper winglet portion is located farther forward than the forward end of the cowl front surface, for example. This makes a negative lift likely to act on the vehicle body forward end portion. A target aerodynamic performance can be obtained easily.

The winglet is configured so as to be located farther inward in the vehicle width direction than the outermost end of the cowl in the vehicle width direction in a vehicle front view, for example. The size of the winglet, and ultimately of the straddled vehicle, in the vehicle width direction can be suppressed.

The winglet is configured such that the upper winglet portion locates between the upper end and the lower end of the cowl front surface, for example. The winglet is configured such that the upper winglet portion locates between the upper outward-inclined cowl front surface and the lower inward-inclined cowl front surface, for example. The winglet is configured such that the upper winglet portion protrudes outward in the vehicle width direction from the cowl front surface, for example.

The winglet is configured such that the upper winglet portion has a wing section, and thus is configured such that a negative lift caused by a traveling wind stream at a time of the vehicle traveling acts on the upper winglet portion, for example.

The winglet is just required to be disposed in at least a portion of the cowl front surface. The winglet is just required to be disposed on the cowl front surface such that a space through which a traveling wind stream flows when the vehicle travels is formed between the cowl front surface and the winglet. The space functions as the tunneled air guide path, for example.

The winglet is at least partially disposed farther upward than the front wheel in a vehicle front view, for example. The winglet is at least partially disposed farther upward than the front fender in a vehicle front view, for example.

The winglet is at least partially disposed farther forward than the rear end of the front wheel in a vehicle side view, for example. The winglet is at least partially disposed farther forward than the rear end of the front fender in a vehicle side view, for example.

The winglet is configured such that the upper winglet portion is at least partially disposed farther upward than the front wheel in a vehicle front view, for example. The winglet is configured such that the upper winglet portion is at least partially disposed farther upward than the front fender in a vehicle front view, for example.

A negative lift acting on the upper winglet portion encompasses a downward force acting on the upper winglet portion, for example. The winglet is configured such that a force pressing the upper winglet portion downward acts on the winglet when the vehicle travels, for example.

The winglet is configured such that, in a vehicle top view, the upper outward-inclined cowl front surface partially covers the upper winglet portion while the upper winglet portion partially covers the lower inward-inclined cowl front surface, for example.

The winglet is configured such that the upper winglet portion includes an upper surface that is connected to the upper outward-inclined cowl front surface, for example. In this configuration, connection of the upper surface of the upper winglet portion to the upper outward-inclined cowl front surface encompasses direct connection and indirect connection of these surfaces. Direct connection of the upper surface of the upper winglet portion to the upper outward-inclined cowl front surface encompasses a configuration in which the upper surface of the upper winglet portion is adjacent to the upper outward-inclined cowl front surface, for example. Indirect connection of the upper surface of the upper winglet portion to the upper outward-inclined cowl front surface encompasses a configuration in which the upper surface of the upper winglet portion is connected to the upper outward-inclined cowl front surface via another surface, for example.

The winglet is configured such that the upper winglet portion includes a lower surface that is connected to the lower inward-inclined cowl front surface, for example. In this configuration, connection of the lower surface of the upper winglet portion to the lower inward-inclined cowl front surface encompasses direct connection and indirect connection of these surfaces. Direct connection of the lower surface of the upper winglet portion to the lower inward-inclined cowl front surface encompasses a configuration in which the lower surface of the upper winglet portion is adjacent to the lower inward-inclined cowl front surface, for example. Indirect connection of the lower surface of the upper winglet portion to the lower inward-inclined cowl front surface encompasses a configuration in which the lower surface of the upper winglet portion is connected to the lower inward-inclined cowl front surface via another surface, for example.

The winglet is configured such that the upper winglet portion includes a lower surface that is connected to the inner side surface of the lower winglet portion in the vehicle width direction, for example. In this configuration, connection of the lower surface of the upper winglet portion to the inner side surface of the lower winglet portion in the vehicle width direction encompasses direct connection and indirect connection of these surfaces. Direct connection of the lower surface of the upper winglet portion to the inner side surface of the lower winglet portion in the vehicle width direction encompasses a configuration in which the lower surface of the upper winglet portion is adjacent to the inner side surface of the lower winglet portion in the vehicle width direction, for example. Indirect connection of the lower surface of the upper winglet portion to the inner side surface of the lower winglet portion in the vehicle width direction encompasses a configuration in which the lower surface of the upper winglet portion is connected to the inner side surface of the lower winglet portion in the vehicle width direction via another surface, for example.

The upper surface and the lower surface of the upper winglet portion are configured such that the thickness of the upper winglet portion varies in a flow direction of a traveling wind stream, for example.

The upper surface of the upper winglet portion is a flat surface, for example. The upper surface of the upper winglet portion is configured such that a cross section of the upper winglet portion as cut in the flow direction of a traveling wind stream includes a straight line that extends in the flow direction of the traveling wind stream, for example. The upper surface of the upper winglet portion is visible in a vehicle front view, for example. The upper surface of the upper winglet portion is an inclined surface having its downstream end located farther upward than its upstream end in the flow direction of the traveling wind stream, for example.

The lower surface of the upper winglet portion is configured such that the thickness of the upper winglet portion is at its maximum in a partway portion in the flow direction of the traveling wind stream, for example. The lower surface of the upper winglet portion is configured such that the thickness of the upper winglet portion is at its maximum in a forward portion in the flow direction of the traveling wind stream, for example. The forward portion in the flow direction of the traveling wind stream is, for example, a portion located farther forward than where the lower surface of the upper winglet portion is bisected in the flow direction of the traveling wind stream. The lower surface of the upper winglet portion is configured such that a cross section of the upper winglet portion as cut in the flow direction of the traveling wind stream includes a curved line that protrudes downward, for example.

The lower winglet portion is disposed so as to protrude from a portion of the cowl front surface, the portion being located farther downward than where the upper winglet portion is disposed so as to protrude, for example. The lower winglet portion is disposed so as to protrude from a portion of the cowl front surface, the portion being located farther outward in the vehicle width direction than where the upper winglet portion is disposed so as to protrude, for example. The lower winglet portion is disposed so as to protrude from a portion of the cowl front surface, the portion being located farther downward than the lower inward-inclined cowl front surface, for example. The lower winglet portion is disposed so as to protrude from a portion of the cowl front surface, the portion being located farther outward in the vehicle width direction than the lower inward-inclined cowl front surface, for example.

Connection of the lower winglet portion to the upper winglet portion encompasses connection of a protruding end portion of the upper winglet portion to the lower winglet portion, for example. Connection of the lower winglet portion to the upper winglet portion encompasses connection of a protruding end portion of the lower winglet portion to the upper winglet portion, for example. Connection of the lower winglet portion to the upper winglet portion encompasses connection of the protruding end portion of the upper winglet portion and the protruding end portion of the lower winglet portion, for example. Connection of the lower winglet portion to the upper winglet portion encompasses the lower winglet portion and the upper winglet portion being formed in one piece with each other, for example.

The configuration in which the lower winglet portion supports the upper winglet portion on which the negative lift acts encompasses a configuration in which the lower winglet portion suppresses the upper winglet portion being bent as a result of the negative lift acting on the upper winglet portion, for example. The configuration in which the lower winglet portion supports the upper winglet portion on which the negative lift acts encompasses a configuration in which the lower winglet portion suppresses the protruding end portion of the upper winglet portion being displaced farther downward than a proximal end portion thereof as a result of the negative lift acting on the upper winglet portion, for example. The configuration in which the lower winglet portion supports the upper winglet portion on which the negative lift acts encompasses a configuration in which the lower winglet portion suppresses the upper winglet portion being bent to displace the protruding end portion of the upper winglet portion farther downward than the proximal end portion thereof as a result of the negative lift acting on the upper winglet portion, for example. The configuration in which the lower winglet portion supports the upper winglet portion on which the negative lift acts encompasses a configuration in which the lower winglet portion suppresses the upper winglet portion being bent so as to displace the protruding end portion of the upper winglet portion farther downward than the proximal end portion thereof as a result of the negative lift acting on the upper winglet portion, for example. The configuration in which the lower winglet portion supports the upper winglet portion on which the negative lift acts encompasses a configuration in which the lower winglet portion supports, from below, the protruding end portion of the upper winglet portion being displaced downward as a result of the negative lift acting on the upper winglet portion, for example. The configuration in which the lower winglet portion supports the upper winglet portion on which the negative lift acts encompasses a configuration in which the lower winglet portion bears the negative lift acting on the upper winglet portion, for example.

The winglet is configured such that the protruding end portion of the lower winglet portion is located farther outward in the vehicle width direction than a proximal end portion of the lower winglet portion, for example. It is possible to obtain a flow rate of the traveling wind stream flowing below the upper winglet portion.

The lower winglet portion is configured to include an outer side surface in the vehicle width direction, the outer side surface being visible in a vehicle front view, for example. It is possible to obtain a flow rate of the traveling wind stream flowing below the upper winglet portion.

The winglet is configured such that the lower winglet portion includes an inner side surface in the vehicle width direction, the inner side surface being connected to the lower inward-inclined cowl front surface, for example. In this configuration, connection of the inner side surface of the lower winglet portion in the vehicle width direction to the lower inward-inclined cowl front surface encompasses direct connection and indirect connection of these surfaces. Direct connection of the inner side surface of the lower winglet portion in the vehicle width direction to the lower inward-inclined cowl front surface encompasses a configuration in which the inner side surface of the lower winglet portion in the vehicle width direction is adjacent to the lower inward-inclined cowl front surface, for example. Indirect connection of the inner side surface of the lower winglet portion in the vehicle width direction to the lower inward-inclined cowl front surface encompasses a configuration in which the inner side surface of the lower winglet portion in the vehicle width direction is connected to the lower inward-inclined cowl front surface via another surface, for example.

Through the air guide paths formed above and below the upper winglet portion, respectively, traveling wind streams flow when the vehicle travels. The phenomenon in which traveling wind streams flow through the air guide paths formed above and below the upper winglet portion, respectively, encompasses a phenomenon in which traveling wind streams flow through the air guide paths formed above and below the upper winglet portion, respectively, such that a negative lift caused by the traveling wind streams acts on the upper winglet portion, for example.

The phenomenon in which a traveling wind stream flows through the air guide path formed above the upper winglet portion encompasses a phenomenon in which a traveling wind stream flows along the upper surface of the upper winglet portion, for example.

The non-tunneled air guide path formed above the upper winglet portion encompasses a configuration in which the upper surface of the upper winglet portion constitutes a surface that defines the bottom of the air guide path, for example. The non-tunneled air guide path formed above the upper winglet portion encompasses a configuration in which the upper outward-inclined cowl front surface constitutes at least a part of a surface that defines the side of the air guide path, for example. The non-tunneled air guide path formed above the upper winglet portion encompasses a configuration in which the air guide path is open at least either upward or outward in the vehicle width direction, for example. The non-tunneled air guide path formed above the upper winglet portion is configured so as not to be enclosed by the winglet and the cowl front surface, for example. This consequently creates a configuration in which this air guide path is open at least either upward or outward in the vehicle width direction. The non-tunneled air guide path formed above the upper winglet portion encompasses a configuration in which the upper surface of the upper winglet portion constitutes the surface that defines the bottom of this air guide path while the entire surface that defines the bottom of this air guide path is not covered by at least a part of the winglet in a vehicle top view, for example. The non-tunneled air guide path formed above the upper winglet portion is an air guide path formed above the winglet, for example. The non-tunneled air guide path formed above the upper winglet portion is an air guide path configured to let a traveling wind stream flow along an outer surface of the winglet, for example. The non-tunneled air guide path formed above the upper winglet portion is an air guide path configured to let a traveling wind stream flow along the upper surface of the upper winglet portion, which is a part of the outer surface of the winglet, for example.

The non-tunneled air guide path formed above the upper winglet portion is an air guide path defined by a surface that is visible at least either in a vehicle top view or in a vehicle side view, for example. The surface that defines the air guide path is a surface that defines the bottom of the air guide path, or a surface (e.g., an inner side surface) that defines the side of the air guide path, for example.

The configuration in which the non-tunneled air guide path formed above the upper winglet portion extends in the forward-rearward direction of the vehicle along the upper outward-inclined cowl front surface encompasses the air guide path being configured to let a traveling wind stream flow in the forward-rearward direction of the vehicle along the upper outward-inclined cowl front surface when the vehicle travels, for example. The phenomenon in which "a traveling wind stream flow in the forward-rearward direction of the vehicle along the upper outward-inclined cowl front surface when the vehicle travels" encompasses a phenomenon in which a traveling wind stream flows rearward of the vehicle and outward in the vehicle width direction along the upper outward-inclined cowl front surface when the vehicle travels, for example. The phenomenon in which "a traveling wind stream flows rearward of the vehicle and outward in the vehicle width direction along the upper outward-inclined cowl front surface when the vehicle travels" encompasses a phenomenon in which a traveling wind stream that comes into contact with the upper outward-inclined cowl front surface when the vehicle travels flows from the forward of the vehicle to the rearward of the vehicle while flowing from the inward in the vehicle width direction to the outward in the vehicle width direction, for example.

The tunneled air guide path is formed below the upper winglet portion, by being enclosed by the lower surface of the upper winglet portion, the inner side surface of the lower winglet portion in the vehicle width direction, and a part of the cowl front surface. Here, the part of the cowl front surface includes the lower inward-inclined cowl front surface. Being enclosed by the lower surface of the upper winglet portion, the inner side surface of the lower winglet portion in the vehicle width direction, and a part of the cowl front surface encompasses being enclosed by the lower surface of the upper winglet portion, the inner side surface of the lower winglet portion in the vehicle width direction, a part of the cowl front surface, and a surface other than these surfaces, for example. The surface other than these surfaces is, for example, a surface that connects the lower surface of the upper winglet portion to a part of the cowl front surface, a surface that connects the inner side surface of the lower winglet portion in the vehicle width direction to a part of the cowl front surface, or a surface that connects the lower surface of the upper winglet portion to the inner side surface of the lower winglet portion in the vehicle width direction.

The configuration in which the tunneled air guide path formed below the upper winglet portion extends in the forward-rearward direction of the vehicle along the lower inward-inclined cowl front surface encompasses the air guide path being configured to let a traveling wind stream flow in the forward-rearward direction of the vehicle along the lower inward-inclined cowl front surface when the vehicle travels, for example.

The phenomenon in which "a traveling wind stream flow in the forward-rearward direction of the vehicle along the lower inward-inclined cowl front surface when the vehicle travels" encompasses a phenomenon in which a traveling wind stream flows rearward of the vehicle and outward in the vehicle width direction along the lower inward-inclined cowl front surface when the vehicle travels, for example. The phenomenon in which "a traveling wind stream flows rearward of the vehicle and outward in the vehicle width direction along the lower inward-inclined cowl front surface when the vehicle travels" encompasses a phenomenon in which a traveling wind stream that comes into contact with the lower inward-inclined cowl front surface when the vehicle travels flows from the forward of the vehicle to the rearward of the vehicle while flowing from the inward in the vehicle width direction to the outward in the vehicle width direction, for example.

The tunneled air guide path formed below the upper winglet portion is an air guide path formed between the cowl front surface and the winglet, for example. The tunneled air guide path formed below the upper winglet portion is an air guide path formed between the cowl front surface and an inner surface of the winglet, for example. The inner surface includes the lower surface of the upper winglet portion, and the inner side surface of the lower winglet portion in the vehicle width direction, for example. The tunneled air guide path formed below the upper winglet portion is an air guide path defined by a surface that is covered and hidden by the winglet in a vehicle top view and in a vehicle side view, for example. The surface that defines the air guide path is a surface that defines the bottom of the air guide path, a surface (e.g., an inner side surface in the vehicle width direction or an outer side surface in the vehicle width direction) that defines the side of the air guide path, or a surface that defines the ceiling of the air guide path, for example.

The tunneled air guide path formed below the upper winglet portion is configured such that an inner upper corner portion of the air guide path is recessed inward in the vehicle width direction, for example. It is possible to obtain a flow rate of the traveling wind stream flowing below the upper winglet portion.

In an aspect of the present teaching, the straddled vehicle may adopt the following configuration.

(2) The straddled vehicle according to (1) further includes a lighting fixture,
the lighting fixture being disposed farther inward in the vehicle width direction than the upper outward-inclined cowl front surface,
the lighting fixture including an outer lens configured to be exposed to the outside of the vehicle through an opening formed in the upper outward-inclined cowl front surface.

The straddled vehicle of (2) is capable of providing a target aerodynamic performance while suppressing an increase in size of the winglet, and ultimately of the straddled vehicle, in the vehicle width direction.

In addition, the lighting fixture can be disposed close to the winglet. More details are as follows.

The upper outward-inclined cowl front surface is inclined outward in the vehicle width direction. A space can be obtained behind the upper outward-inclined cowl front surface (that is, the inner side in the vehicle width direction). By using this space, the lighting fixture can be disposed. The lighting fixture can be disposed close to the winglet.

The lighting fixture is just required to be configured to emit light from a light source to the forward of the vehicle, for example. The lighting fixture is a position lamp, for example. The position lamp is used to inform the presence of the straddled vehicle to the surroundings of the straddled vehicle, for example. The light source receives an electric power supply from the outside, and outputs light to the outside, for example. The electric power supplied to the light source is stored in a battery provided in the straddled vehicle, for example. In other words, the light source receives an electric power supply from the battery provided in the straddled vehicle, and outputs light. The light source is, for example, a light emitting diode, a semiconductor laser, a super luminescent diode (SLD) light source, a high-intensity discharge (HID) valve, a halogen lamp, an incandescent lamp, or the like.

The lighting fixture is disposed farther inward in the vehicle width direction than the upper outward-inclined cowl front surface. The configuration in which the lighting fixture is disposed farther inward in the vehicle width direction than the upper outward-inclined cowl front surface encompasses a configuration in which at least a part of the lighting fixture is disposed farther inward in the vehicle width direction than the upper outward-inclined cowl front surface, for example.

The lighting fixture is disposed farther inward in the vehicle width direction than the upper outward-inclined cowl front surface. In this state, the outer lens of the lighting fixture is exposed to the outside of the vehicle through the opening formed in the upper outward-inclined cowl front surface. The outer lens of the lighting fixture may be at least partially positioned farther outward in the vehicle width direction than the upper outward-inclined cowl front surface, for example. The configuration in which the lighting fixture is disposed farther inward in the vehicle width direction than the upper outward-inclined cowl front surface encompasses a configuration in which at least a part of the outer lens of the lighting fixture is positioned farther outward in the vehicle width direction than the upper outward-inclined cowl front surface, for example. Just required of the outer lens of the lighting fixture is that the outer lens be configured to allow light from the light source of the lighting fixture to pass therethrough.

According to an aspect of the present teaching, the straddled vehicle may adopt the following configuration.

(3) In the straddled vehicle according to (2),
the winglet is configured such that the forward end of the upper winglet portion is located farther forward than the forward end of the lighting fixture.

In the straddled vehicle of (3), the upper winglet portion, on which a negative lift acts when the vehicle travels, is disposed in the vehicle body forward end portion or its vicinity in the straddled vehicle. This makes the negative lift likely to act on the vehicle body forward end portion. A target aerodynamic performance can be obtained easily.

The configuration in which the forward end of the upper winglet portion is located farther forward than the forward end of the lighting fixture encompasses a configuration in which the forward end of the upper winglet portion is located farther forward than the forward end of the outer lens of the lighting fixture, for example. The configuration in which the forward end of the upper winglet portion is located farther forward than the forward end of the lighting fixture encompasses a configuration in which the forward end of the upper winglet portion is located farther forward than the forward end of a portion of the outer lens of the lighting fixture, the portion being exposed to the outside of the vehicle through the opening formed in the upper outward-inclined cowl front surface, for example. The configuration in which the forward end of the upper winglet portion is located farther forward than the forward end of the lighting fixture encompasses a configuration in which the forward end of the upper winglet portion is located farther forward than the forward end of a portion of the lighting fixture, the portion being exposed to the outside of the vehicle through the opening formed in the upper outward-inclined cowl front surface, for example.

According to an aspect of the present teaching, the straddled vehicle may adopt the following configuration.

(4) In the straddled vehicle according to any of (1) to (3),
the winglet is configured such that the forward end of the upper winglet portion extends forward of the vehicle and outward in the vehicle width direction.

In the straddled vehicle of (4), the winglet has what is called a forward-swept angle. Accordingly, a target aerodynamic performance can be obtained easily.

The configuration in which the forward end of the upper winglet portion extends forward of the vehicle and outward in the vehicle width direction encompasses a configuration in which the forward end of the upper winglet portion extends forward of the vehicle while extending outward in the vehicle width direction, for example.

According to an aspect of the present teaching, the straddled vehicle may adopt the following configuration.

(5) In the straddled vehicle according to any of (1) to (4),
the winglet is integrally formed on the cowl.

In the straddled vehicle of (5), unlike in a configuration in which the winglet is formed as a separate piece from the cowl, a mounting portion for attachment of the winglet to the cowl is not present on the cowl front surface. The presence of the mounting portion hinders a smooth flow of a traveling wind stream, to make it difficult to obtain a target aerodynamic performance. The absence of the mounting portion provides a smooth flow of a traveling wind stream. A target aerodynamic performance can be obtained easily.

The configuration in which the winglet is formed in one piece with the cowl encompasses a configuration in which a surface of the winglet is seamlessly connected to the cowl surface, for example.

According to an aspect of the present teaching, the straddled vehicle may adopt the following configuration.

(6) In the straddled vehicle according to (5),
the cowl includes an upper cowl and a side cowl, the upper cowl including the cowl front surface, and the cowl front surface having the winglet integrally formed thereon, the side cowl including an outer side surface configured to be continuous with an outer side surface in the vehicle width direction of the lower winglet portion of the winglet, the side cowl being configured such that the outer side surface defines the outermost end of the cowl in the vehicle width direction.

In the straddled vehicle of (6), the side cowl is a member separate from the upper cowl, which has the winglet formed in one piece therewith. The outer side surface of the side cowl can be designed so as to match the outer side surface in the vehicle width direction of the lower winglet portion of the winglet. The size of the straddled vehicle in the vehicle width direction can be suppressed as compared to a configuration in which the lower winglet portion of the winglet is formed as a separate structure or an additional structure provided to the side cowl.

The upper cowl includes the cowl front surface. The winglet is formed in one piece with the upper cowl. The surface of the winglet is seamlessly connected to the cowl front surface, for example.

The outer side surface of the side cowl is continuous with the outer side surface of the lower winglet portion in the vehicle width direction. Here, the configuration in which the outer side surface of the side cowl is continuous with the outer side surface of the lower winglet portion in the vehicle width direction encompasses a configuration in which the outer side surface of the side cowl is flush with the outer side surface of the lower winglet portion in the vehicle width direction, for example. The configuration in which the outer side surface of the side cowl is continuous with the outer side surface of the lower winglet portion in the vehicle width direction encompasses a configuration in which the end of the outer side surface of the side cowl close to the lower winglet is at the same or substantially the same position in the vehicle width direction as the end of the outer side surface of the lower winglet portion in the vehicle width direction close to the outer side surface of the side cowl, for example.

The configuration in which the outer side surface of the side cowl defines the outermost end of the cowl in the vehicle width direction encompasses a configuration in which at least a part of the outer side surface is positioned at the outermost end of the cowl in the vehicle width direction, for example. For example, the rear end or a rear end portion of the outer side surface is positioned at the outermost end of the cowl in the vehicle width direction.

According to an aspect of the present teaching, the straddled vehicle may adopt the following configuration.

(7) The straddled vehicle according to any of (1) to (6) further includes a traveling wind stream guide member,
the traveling wind stream guide member being disposed farther inward in the vehicle width direction than the cowl front surface, the traveling wind stream guide member including a guide path configured to guide a traveling wind stream to the tunneled air guide path formed below the upper winglet portion when the vehicle travels.

In the straddled vehicle of (7), a traveling wind stream is guided to the tunneled air guide path formed below the upper winglet portion. It is possible to obtain a flow rate of the traveling wind stream flowing through the tunneled air guide path. A target aerodynamic performance can be obtained easily.

The traveling wind stream guide member is disposed farther inward in the vehicle width direction than the cowl front surface, for example. The configuration in which the traveling wind stream guide member is disposed farther inward in the vehicle width direction than the cowl front surface encompasses a configuration in which at least a part of the traveling wind stream guide member is disposed farther inward in the vehicle width direction than the cowl front surface, for example.

The guide path is disposed farther inward in the vehicle width direction than the cowl front surface. The configuration in which the guide path is disposed farther inward in the vehicle width direction than the cowl front surface encompasses a configuration in which at least a part of the guide path is disposed farther inward in the vehicle width direction than the cowl front surface, for example.

The traveling wind stream guide member is a member separate from the cowl, for example. The traveling wind stream guide member is disposed so as to be adjustable in its position, for example. The traveling wind stream guide member is a chin spoiler as it is called.

The guide path is configured to have a groove shape extending in the vehicle width direction, for example. By the guide path with this configuration, a traveling wind stream that comes into contact with the traveling wind stream guide member is guided outward in the vehicle width direction. As a result, the traveling wind stream is guided to the tunneled air guide path formed below the upper winglet portion.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching makes it possible to provide a straddled vehicle including a cowl having a winglet, the straddled vehicle being capable of providing a target aerodynamic performance while suppressing an increase in size of the winglet, and ultimately of the straddled vehicle, in the vehicle width direction.

### Brief Description of Drawings

[FIG. 1] An explanatory diagram illustrating a straddled vehicle according to an embodiment of the present teaching, in which (A) shows a side view of the straddled vehicle, and (B) shows a front view of the straddled vehicle
[FIG. 2] A front view showing an exemplary variation of the straddled vehicle according to the embodiment of the present teaching
[FIG. 3] A perspective view showing another exemplary variation of the straddled vehicle according to the embodiment of the present teaching
[FIG. 4] A front view showing still another exemplary variation of the straddled vehicle according to the embodiment of the present teaching

### Description of Embodiments

An embodiment described below is merely an example. The present teaching should not be construed as being limited in any way by the embodiment described below.

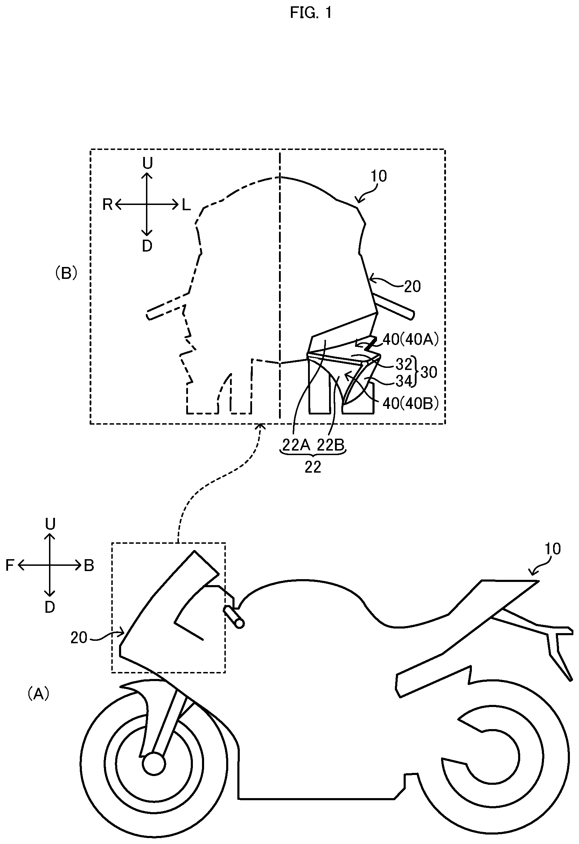

Referring to FIG. 1, a straddled vehicle 10 according to an embodiment of the present teaching will be described.

The straddled vehicle 10 includes a cowl 20 and a winglet 30. The cowl 20 is configured to regulate a traveling wind stream when the vehicle travels. The winglet 30 is disposed in the cowl 20. The winglet 30 is configured such that a negative lift caused by the traveling wind stream at a time of the vehicle traveling acts thereon.

The cowl 20 includes a cowl front surface 22. The cowl front surface 22 is disposed so as to be visible in a vehicle front view. The cowl front surface 22 is configured to let the traveling wind stream flow rearward of the vehicle and outward in the vehicle width direction when the vehicle travels.

The winglet 30 includes an upper winglet portion 32 and a lower winglet portion 34. The upper winglet portion 32 is disposed so as to protrude from the cowl front surface 22. The upper winglet portion 32 is configured such that a negative lift acts thereon when the vehicle travels. The lower winglet portion 34 is disposed so as to protrude from a portion of the cowl front surface 22, the portion being located farther downward than the upper winglet portion 32. The lower winglet portion 34, which is connected to the upper winglet portion 32, is configured to support the upper winglet portion 32 on which the negative lift acts when the vehicle travels. With this configuration, air guide paths 40 are formed above and below the upper winglet portion 32, respectively, the air guide paths 40 being each configured to let the traveling wind stream flow therethrough when the vehicle travels.

The air guide path 40 formed above the upper winglet portion 32 is a non-tunneled air guide path 40A. The non-tunneled air guide path 40A is configured to extend in the forward-rearward direction of the vehicle along an upper outward-inclined cowl front surface 22A. The upper outward-inclined cowl front surface 22A is a portion of the cowl front surface 22, the portion being located farther upward than the upper winglet portion 32 and inclined outward in the vehicle width direction.

The air guide path 40 formed below the upper winglet portion 32 is a tunneled air guide path 40B. The tunneled air guide path 40B is an air guide path formed by being enclosed by a lower surface of the upper winglet portion 32, an inner side surface of the lower winglet portion 34 in the vehicle width direction, and a part of the cowl front surface 22. The tunneled air guide path 40B is configured to extend in the forward-rearward direction of the vehicle along a lower inward-inclined cowl front surface 22B. The lower inward-inclined cowl front surface 22B is a portion of the cowl front surface 22, the portion being located farther downward than the upper winglet portion 32 and inclined inward in the vehicle width direction.

The straddled vehicle 10 is capable of providing a target aerodynamic performance, while suppressing an increase in size of the winglet 30, and ultimately of the straddled vehicle 10, in the vehicle width direction.

The winglet 30 is disposed on the cowl front surface 22, which is visible in a vehicle front view. The size of the winglet 30, and ultimately of the straddled vehicle 10, in the vehicle width direction can be suppressed.

The non-tunneled air guide path 40A, which is formed above the upper winglet portion 32, extends in the forward-rearward direction of the vehicle along the upper outward-inclined cowl front surface 22A. A flow rate of the traveling wind stream flowing along an upper surface of the upper winglet portion 32 can be obtained. The tunneled air guide path 40B, which is formed below the upper winglet portion 32, extends in the forward-rearward direction of the vehicle along the lower inward-inclined cowl front surface 22B. A flow rate of the traveling wind stream flowing along the lower surface of the upper winglet portion 32 can be obtained. Thus, flow rates of the traveling wind streams flowing in the air guide paths 40 formed above and below the upper winglet portion 32, respectively, can be obtained. A target aerodynamic performance can be obtained.

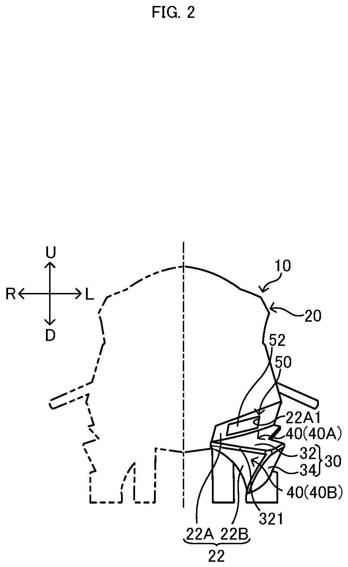

Referring to FIG. 2, an exemplary variation of the straddled vehicle 10 will be described.

The straddled vehicle 10 may further include a lighting fixture 50.

The lighting fixture 50 is disposed farther inward in the vehicle width direction than the upper outward-inclined cowl front surface 22A. The lighting fixture 50 includes an outer lens 52. The outer lens 52 is configured to be exposed to the outside of the vehicle through an opening 22A1, which is formed in the upper outward-inclined cowl front surface 22A.

The winglet 30 may be configured such that the forward end 321 of the upper winglet portion 32 is located farther forward than the forward end of the lighting fixture 50. In the example illustrated in FIG. 2, the forward end 321 of the upper winglet portion 32 is located farther forward than the forward end of the outer lens 52 of the lighting fixture 50.

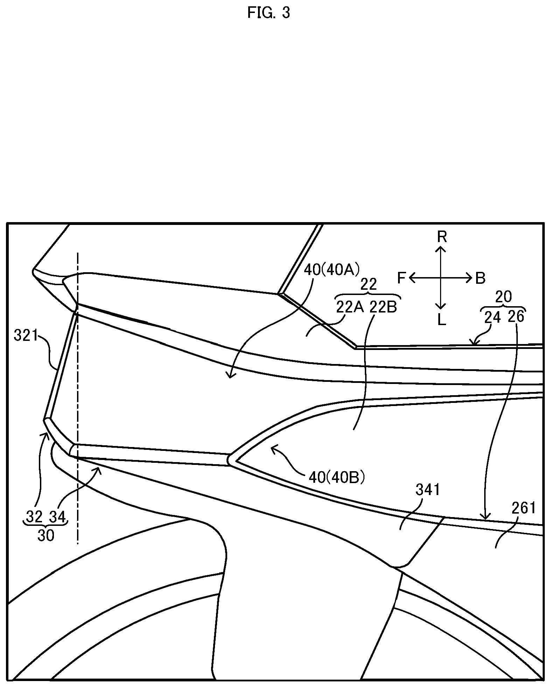

Referring to FIG. 3, another exemplary variation of the straddled vehicle 10 will be described.

The winglet 30 may be configured such that the forward end 321 of the upper winglet portion 32 extends forward of the vehicle and outward in the vehicle width direction.

The winglet 30 may be formed in one piece with the cowl 20.

The cowl 20 may include an upper cowl 24 and a side cowl 26. The upper cowl 24 includes the cowl front surface 22, and thus the winglet 30 is formed in one piece therewith. The side cowl 26 includes an outer side surface 261. The outer side surface 261 is configured to be continuous with an outer side surface 341 in the vehicle width direction of the lower winglet portion 34 of the winglet 30. The side cowl 26 is configured such that the outer side surface 261 defines the outermost end of the cowl 20 in the vehicle width direction.

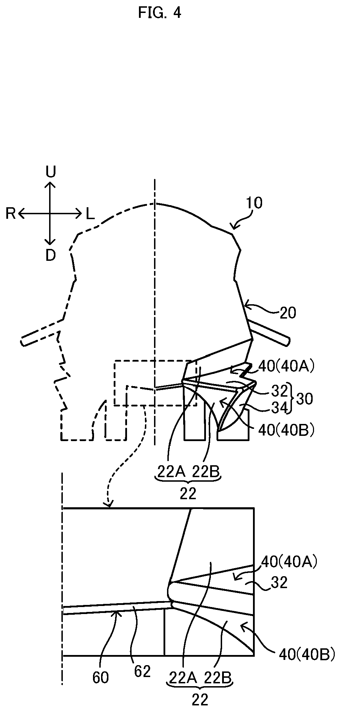

Referring to FIG. 4, still another exemplary variation of the straddled vehicle 10 will be described.

The straddled vehicle 10 may further include a traveling wind stream guide member 60. The traveling wind stream guide member 60 is disposed farther inward in the vehicle width direction than the cowl front surface 22. The traveling wind stream guide member 60 includes a guide path 62. The guide path 62 is configured to guide a traveling wind stream to the tunneled air guide path 40B, which is formed below the upper winglet portion 32, when the vehicle travels.

### (Other Embodiments)

The embodiments and variations, of which at least either one of description or illustration has been given herein, are for ease of understanding the present disclosure, and not for limiting the concept of the present disclosure. The foregoing embodiments and variations may be altered and/or adapted without departing from the scope of the present disclosure. The scope encompasses equivalent elements, modifications, omissions, combinations (for example, a combination of features of any embodiment and any variation), adaptations and/or alterations as would be appreciated by those skilled in the art based on the embodiments disclosed herein. The limitations in the claims are to be broadly interpreted based on the language employed in the claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively.

### Reference Signs List

- 10: straddled vehicle
- 20: cowl
- 22: cowl front surface
- 22A: upper outward-inclined cowl front surface
- 22B: lower inward-inclined cowl front surface
- 30: winglet
- 32: upper winglet portion
- 34: lower winglet portion
- 40: air guide path

## Claims

1. A straddled vehicle (10) comprising:
a cowl (20) configured to regulate a traveling wind stream when the vehicle (10) travels; and
a winglet (30) disposed in the cowl (20), the winglet (30) being configured such that a negative lift caused by a traveling wind stream at a time of the vehicle (10) traveling acts thereon,
the cowl (20) including a cowl front surface (22), the cowl front surface (22) being disposed so as to be visible in a vehicle front view, the cowl front surface (22) being configured to let a traveling wind stream flow rearward of the vehicle (10) and outward in vehicle width direction when the vehicle (10) travels,
the winglet (30) including an upper winglet portion (32) and a lower winglet portion (34), the upper winglet portion (32) being disposed so as to protrude from the cowl front surface (22), the upper winglet portion (32) being configured such that the negative lift acts thereon when the vehicle (10) travels, the lower winglet portion (34) being disposed so as to protrude from a portion of the cowl front surface (22), the portion being located farther downward than the upper winglet portion (32), the lower winglet portion (34) being connected to the upper winglet portion (32) and configured to support the upper winglet portion (32) on which the negative lift acts when the vehicle (10) travels, whereby
air guide paths (40) are formed above and below the upper winglet portion (32), respectively, the air guide paths (40) being each configured to let a traveling wind stream flow therethrough when the vehicle (10) travels,
the air guide path (40) formed above the upper winglet portion (32) is a non-tunneled air guide path (40A), and is configured to extend in forward-rearward direction of the vehicle (10) along an upper outward-inclined cowl front surface (22A), the upper outward-inclined cowl front surface (22A) being a portion of the cowl front surface (22), the portion being located farther upward than the upper winglet portion (32) and inclined outward in the vehicle width direction, and
the air guide path (40) formed below the upper winglet portion (32) is a tunneled air guide path (40B) enclosed by a lower surface of the upper winglet portion (32), an inner side surface of the lower winglet portion (34) in the vehicle width direction, and a part of the cowl front surface (22), the tunneled air guide path (40B) being configured to extend in the forward-rearward direction of the vehicle (10) along a lower inward-inclined cowl front surface (22B), the lower inward-inclined cowl front surface (22B) being a portion of the cowl front surface (22), the portion being located farther downward than the upper winglet portion (32) and inclined inward in the vehicle width direction.

2. The straddled vehicle (10) according to claim 1, further comprising a lighting fixture (50),
the lighting fixture (50) being disposed farther inward in the vehicle width direction than the upper outward-inclined cowl front surface (22A),
the lighting fixture (50) including an outer lens (52) configured to be exposed to the outside of the vehicle (10) through an opening (22A1) formed in the upper outward-inclined cowl front surface (22A).

3. The straddled vehicle (10) according to claim 2, wherein
the winglet (30) is configured such that the forward end of the upper winglet portion (32) is located farther forward than the forward end of the lighting fixture (50).

4. The straddled vehicle (10) according to any one of claims 1 to 3, wherein
the winglet (30) is configured such that the forward end of the upper winglet portion (32) extends forward of the vehicle (10) and outward in the vehicle width direction.

5. The straddled vehicle (10) according to any one of claims 1 to 4, wherein
the winglet (30) is integrally formed on the cowl (20).

6. The straddled vehicle (10) according to claim 5, wherein
the cowl (20) includes an upper cowl (24) and a side cowl (26), the upper cowl (24) including the cowl front surface (22), and the cowl front surface (22) having the winglet (30) integrally formed thereon, the side cowl (26) including an outer side surface (261) configured to be continuous with an outer side surface (341) in the vehicle width direction of the lower winglet portion (34) of the winglet (30), the side cowl (26) being configured such that the outer side surface (261) defines the outermost end of the cowl (20) in the vehicle width direction.

7. The straddled vehicle (10) according to any one of claims 1 to 6, further comprising a traveling wind stream guide member,
the traveling wind stream guide member (60) being disposed farther inward in the vehicle width direction than the cowl front surface (22), the traveling wind stream guide member (60) including a guide path (62) configured to guide a traveling wind stream to the tunneled air guide path (40B formed below the upper winglet portion (32) when the vehicle (10) travels.
